# FASCICULE DE BREVET EUROPEEN

(11) **EP 3 077 564 B1**
(45) Date de publication et mention de la délivrance du brevet: **26.02.2020**
(21) Numéro de dépôt: 14808985.7
(22) Date de dépôt: 05.12.2014
(51) Int. Cl.: C23C 4/10, C23C 4/12, F16C 17/04, F16C 17/02, F16C 33/04, F16C 33/10, C23C 4/11, C23C 4/134

(54) **UNE UTILISATION A HAUTE TEMPERATURE D'UN MATERIAU DE REVETEMENT AUTOLUBRIFIANT DANS UN PALIER À FEUILLES ET PIECE REVETUE D'UN TEL MATERIAU**
HOCHTEMPERATURANWENDUNG EINES SELBSTSCHMIERENDEN BESCHICHTUNGSMATERIALS IN EINEM FOLIENLAGER UND MIT DIESEM MATERIAL BESCHICHTETES TEIL
HIGH TEMPERATURE USE OF A SELF LUBRICATING COATING MATERIAL IN A FOIL BEARING AND PART COATED WITH SUCH A MATERIAL

(30) Priorité: 05.12.2013 FR 1362190
(43) Date de publication de la demande: 12.10.2016
(73) Titulaire: Liebherr-Aerospace Toulouse SAS, 31200 Toulouse (FR)
(72) Inventeur: ROCCHI, Jérôme, 31380 Roqueseriere (FR); GRAU, Grégory, 82210 Castelmayran (FR)
(74) Mandataire: Plasseraud IP
(86) Numéro de dépôt international: PCT/EP2014/076705
(87) Numéro de publication internationale: WO 2015/082678

(56) Documents cités:
- EP-A2- 2 366 813
- US-A1- 2006 254 418
- US-A1- 2009 176 110
- C DELLACORTE ET AL: "Evaluation of advanced solid lubricant coatings for foil air bearings operating at 25[deg.]and 500[deg.]C", TRIBOLOGY TRANSACTIONS, vol. 42, no. 2, 1 janvier 1999 (1999-01-01), pages 338-342, XP055165381, ISSN: 1040-2004

## Description

La présente invention concerne un matériau de revêtement autolubrifiant pour une utilisation à haute température et une pièce revêtue d'un tel matériau.

Dans la plupart des turbomachines, des très grandes vitesses de rotation sont atteintes, allant par exemple de 20.000 à 120.000 tours par minute (tr/min). Pour guider un rotor tournant à une telle vitesse, il est classique d'utiliser des paliers à feuilles à la place de roulements classiques qui ne sont pas compatibles avec de telles vitesses de rotation. Un film d'air ambiant est alors utilisé pour porter un rotor qui se trouve ainsi en "lévitation" par rapport à un logement fixe. Un tel palier est alors appelé aussi palier aérodynamique à feuilles.

Lorsque le rotor tourne à grande vitesse, il n'y a pas de contact entre les divers éléments solides du palier. Toutefois, avant et après une phase de rotation à grande vitesse, lors d'une mise en route ou d'un arrêt, le film d'air assurant le rôle de roulement n'est pas formé dans le logement fixe et une feuille, dite feuille supérieure, du palier à feuilles est en contact local avec à la fois le rotor et le logement fixe les recevant. Il convient alors de prévoir au niveau des surfaces de contact des moyens pour limiter les frottements entre ces éléments.

Il est connu d'utiliser du PTFE (acronyme de l'anglais Polytetrafluoroethylene, ou en français tétra-fluoroéthylène) comme lubrifiant pour éviter une usure des pièces dans un palier à feuilles lors des phases de démarrage et d'arrêt. Ce matériau vient habituellement recouvrir une feuille du palier qui fait face à la pièce tournante, appelée aussi feuille supérieure, et présente de bonnes performances à des températures relativement basses mais ne peut pas être utilisé à hautes températures (au-dessus de 200°C environ).

Lorsque le rotor est intégré dans une machine avec un moteur électrique de puissance relativement forte, ce moteur est une source de chaleur. L'air ambiant dans cette machine utilisé pour la ventilation est alors un air chaud. On peut alors arriver, du fait de la chaleur du moteur en plus de la chaleur dégagée localement par les frottements, de ne pas suffisamment évacuer les calories et d'atteindre des températures élevées de l'ordre de 300 à 400°C.

Le document US-5,866,518 propose un matériau composite autolubrifiant pour réduire les frottements et l'usure qui peut être utilisé sur une très large plage de températures, allant de températures cryogéniques à des températures jusqu'à 900°C. Ce matériau comprend entre 60 et 80% en poids d'oxyde de chrome dispersé dans un liant métallique d'un alliage contenant du chrome et éventuellement du nickel ainsi que 5 à 20% en poids d'un fluorure des groupes I ou II, ou un métal de terre rare et éventuellement un lubrifiant métallique.

Le document US-7,297,367 concerne quant à lui un procédé d'application d'un revêtement lubrifiant de type inorganique déposé sur une feuille supérieure d'un palier à feuilles pour résister à des températures plus hautes que les revêtements inorganiques antérieurs. L'application du revêtement se fait par projection ou par immersion.

La présente invention a alors pour but de fournir un nouveau revêtement permettant de protéger de l'usure la (les) feuille(s) d'un palier à feuilles et de résister à des hautes températures.

La présente invention vise notamment la protection de l'usure de la feuille supérieure, généralement non revêtue, du palier. Elle vise également de préférence à permettre une protection des butées qui peuvent également être soumises à des frottements.

À cet effet, la présente invention propose d'utiliser un revêtement comportant entre 50 et 90 % en poids d'alumine (Al₂O₃) ainsi qu'un oxyde choisi dans le groupe consistant en de l'oxyde de titane (TiO₂), de l'oxyde de chrome (Cr₂O₃) et un mélange de ceux-ci comme revêtement autolubrifiant pour une utilisation à haute température d'un rotor dans un palier à feuilles.

Des tests ont montré qu'un tel revêtement, de préférence purement céramique et sans liant métallique, est particulièrement bien adapté pour résister à des hautes températures et comporte en outre de bonnes qualités de lubrification. Une forme de réalisation préférée prévoit ici que le revêtement utilisé consiste en un mélange de 50 et 90 % en poids d'alumine (Al₂O₃) avec un oxyde choisi dans le groupe consistant en de l'oxyde de titane (TiO₂), de l'oxyde de chrome (Cr₂O₃) et un mélange de ceux-ci.

Dans une forme de réalisation préférée, le revêtement selon l'invention est un mélange d'alumine (Al₂O₃) et d'oxyde de titane (TiO₂). Des tests réalisés ont montré que l'oxyde de titane était préféré à de l'oxyde de chrome qui permet toutefois aussi d'atteindre de bonnes performances en termes de lubrification et de tenue aux hautes températures. D'après ces tests, le revêtement comporte de préférence entre 65 et 75% en poids d'alumine (Al₂O₃).

La présente invention concerne également une pièce de turbomachine, comportant un palier cylindrique circulaire qui est revêtu au moins partiellement par un revêtement autolubrifiant tel que décrit précédemment, c'est-à-dire un revêtement comportant entre 50 et 90% en poids d'alumine(Al₂O₃) ainsi qu'un oxyde choisi dans le groupe consistant en de l'oxyde de titane (TiO₂), de l'oxyde de chrome (Cr₂O₃) et un mélange de ceux-ci.

Une telle pièce de turbomachine peut être telle que son revêtement autolubrifiant est déposé par un procédé de projection thermique puis rectifié. Le procédé de projection thermique est de préférence un procédé de pulvérisation plasma à air (connu aussi sous le nom anglais de "air plasma spraying").

Une pièce de turbomachine selon l'invention est par exemple choisie dans l'ensemble des pièces comportant les rotors et les disques de butée.

La présente invention concerne en outre une turbomachine, caractérisée en ce qu'elle comporte une pièce de turbomachine telle que décrite plus haut. Une telle turbomachine comporte alors de préférence un palier aérodynamique à feuilles présentant un logement dans lequel viennent prendre place, d'une part, une partie cylindrique circulaire d'une pièce de turbomachine, ladite partie cylindrique circulaire étant revêtue au moins partiellement par un revêtement autolubrifiant comportant entre 50 et 90 % en poids d'alumine (Al₂O₃) ainsi qu'un oxyde choisi dans le groupe consistant en de l'oxyde de titane (TiO₂), de l'oxyde de chrome (Cr₂O₃) et un mélange de ceux-ci et, d'autre part, au moins une feuille, dite feuille supérieure, venant en regard de ladite partie cylindrique circulaire, ladite feuille supérieure étant à l'état brut.

Enfin, la présente invention concerne un dispositif de conditionnement d'air, caractérisé en ce qu'il comporte une turbomachine décrite au paragraphe précédent.

Des détails et avantages de la présente invention apparaitront mieux de la description qui suit présentant une forme de réalisation particulière de l'invention.

L'invention concerne plus particulièrement l'introduction sur un rotor ou un disque de butée d'une turbomachine dans laquelle des pièces peuvent tourner à des vitesses élevées (par exemple supérieures à 60.000 tr/min) d'un revêtement autolubrifiant. Une telle turbomachine peut être ou non motorisée électriquement. Les pièces tournant à de telles vitesses, ou rotor, sont montées le plus souvent sur des paliers à feuilles et la présente invention concerne plus particulièrement des machines comportant au moins un palier de ce type.

Un palier à feuilles, ou palier aérodynamique à feuilles, comporte un logement dans lequel vient prendre place une partie cylindrique circulaire d'un rotor. Il est prévu qu'à de très hautes vitesses de rotation, un film d'air vienne se former entre le logement et la partie cylindrique évitant tout contact de cette partie cylindrique avec la paroi intérieure du logement correspondant. Toutefois, lorsqu'un régime permanent n'est pas encore établi, des contacts peuvent avoir lieu. On prévoit alors de disposer une feuille de matériau lubrifiant pour éviter une usure du logement et/ou de la partie cylindrique correspondante. Cette feuille assure la lubrification du palier dans les phases de démarrage et d'arrêt de la pièce tournante.

Les documents US-7,297,367 et WO-2007/004770 illustrent deux types différents de paliers à feuilles auxquels la présente invention peut être appliquée. D'autres types de paliers autorisant des vitesses de rotation (très) élevées peuvent également être concernés par la présente invention.

Un disque de butée est associé en général à un palier et a pour but d'éviter un déplacement longitudinal de la pièce tournante. Ici aussi, dans les phases transitoires (mise en marche et arrêt de la turbomachine) il est nécessaire de prévoir une lubrification pour éviter une usure prématurée des disques de butée.

La présente invention propose de venir revêtir un rotor et/ou un disque de butée, ou tout du moins la partie cylindrique circulaire d'un rotor et/ou une face d'un disque de butée venant prendre place au niveau d'un palier, d'un revêtement autolubrifiant permettant de résister à de hautes températures (allant par exemple jusqu'à 400° C).

Le revêtement proposé, dans une forme de réalisation préférée, est composé d'alumine (Al₂O₃) et d'oxyde de titane (TiO₂) et il est appliqué par un procédé de projection thermique. Ce revêtement a alors pour but de protéger de l'usure dans un environnement dans lequel la température peut varier de -50° C à +400° C, dans un palier aérodynamique à feuille, notamment lors de phases transitoires (démarrage, arrêt et éventuellement changement de régime de rotation), les pièces revêtues et celles venant en contact avec ces pièces revêtues.

Alors qu'il est habituel de revêtir une feuille supérieure d'un palier aérodynamique d'un matériau lubrifiant, il est proposé par la présente invention de conserver brute cette feuille supérieure, c'est-à-dire la feuille du palier venant en regard de la partie cylindrique circulaire du corps tournant. La feuille supérieure ne présente donc pas ici de revêtement.

Tout d'abord, la présente invention concerne le revêtement proprement dit. Comme indiqué, ce revêtement comporte dans une forme de réalisation préférée de l'alumine et de l'oxyde de titane. La proportion d'alumine (Al₂O₃) est comprise entre 50 et 90% en poids du revêtement. Cette proportion, dans une forme préférée se situe aux alentours de 70%, par exemple entre 65 et 75% en poids du mélange formant le revêtement.

Dans le revêtement, de l'oxyde de titane (TiO₂) vient en complément de l'alumine. Un mode de réalisation préféré prévoit ainsi 70% en poids d'alumine (Al₂O₃) et 30% en poids d'oxyde de titane (TiO₂).

Selon une variante de réalisation de l'invention, tout ou partie de l'oxyde de titane peut être remplacé par de l'oxyde de chrome (Cr₂O₃). Le revêtement peut ainsi être constitué d'alumine (de 50 à 90% en poids), d'oxyde de titane (de 0 à 50% en poids) et/ou d'oxyde de chrome (de 0 à 50% en poids).

Ainsi un revêtement selon la forme de réalisation préférée de la présente invention ne comporte que des céramiques "dures" et il n'est prévu aucun liant métallique entre ces céramiques.

Des essais comparatifs ont été réalisés en utilisant un revêtement selon la forme de réalisation préférée de la présente invention et un revêtement de référence de l'art antérieur. Le revêtement de l'art antérieur choisi porte la référence PS304. Il correspond à une nuance décrite dans le brevet US-5,866,518. Sa composition correspond à un mélange de quatre composants : 60% en poids de NiCr en tant que matrice, 20% en poids de Cr₂O₃ pour assurer une tenue à l'usure, une stabilité chimique et une haute tenue à l'oxydation, 10% en poids d'Ag en tant que lubrifiant et 10% en poids de l'eutectique de BaF₂/CaF₂ en tant que lubrifiant haute température.

Des mesures de couple résistant ont été faites à une température de 300° C. Lorsque le couple résistant maximal se situe entre 0,30 et 0,35 Nm avec un revêtement de l'art antérieur, il est compris entre 0,25 et 0,30 Nm avec un revêtement selon l'invention. En ce qui concerne le couple résistant résiduel, celui-ci est sensiblement nul avec un revêtement selon l'invention alors qu'il est de l'ordre de 0,01 Nm avec un revêtement de l'art antérieur.

Les coefficients de frottement ont également été mesurés. On remarque qu'à basse température (20° C), le coefficient de frottement avec un mélange d'Al₂O₃ et de TiO₂ selon l'invention est plus élevé (0,19 contre 0,17) par contre, à des températures plus élevées, le coefficient de frottement diminue avec la présente invention pour être à environ 0,13 vers 300° C tandis que pour le revêtement PS304, ce coefficient reste presque inchangé à 300° C (environ 0,19).

En termes d'usure, le revêtement selon l'invention est particulièrement intéressant. On a mesuré l'usure en µm³ du revêtement sur un arbre après 10.000 cycles puis après 100.000 cycles. Alors qu'avec un revêtement selon l'invention dans les deux cas l'usure est limitée à quelques (moins de 10) µm³, elle est de l'ordre de 150 µm³ à 10.000 cycles, usure jugée trop élevée pour envisager un essai à 100.000 cycles.

Ces divers essais montrent les excellentes performances obtenues avec un revêtement selon la présente invention, notamment dans des plages de températures élevées. Ces performances sont inattendues et illustrent ainsi l'intérêt de l'invention.

La présente invention concerne également une pièce de turbomachine revêtue au moins partiellement avec un revêtement autolubrifiant céramique tel que décrit ci-dessus.

Cette pièce de turbomachine sera par exemple un rotor, ou tout du moins une partie cylindrique circulaire d'un rotor destinée à venir prendre place dans un palier aérodynamique à feuilles.

Cette pièce de turbomachine peut également être un disque de butée, notamment un disque de butée utilisé en combinaison avec un palier aérodynamique à feuilles. On pourra prévoir de revêtir d'un revêtement autolubrifiant selon l'invention au moins une face du disque de butée destinée à faire face au palier auquel il est associé.

La turbomachine contenant le palier et un rotor et/ou un disque de butée selon la présente invention peut être tout type de turbomachine. Il peut notamment s'agir d'une turbomachine entrainée par un moteur électrique ou bien une turbomachine entrainée par un flux d'air. La présente invention concerne également une telle turbomachine.

Le revêtement décrit plus haut peut être appliqué sur un rotor ou un disque de butée (ou une partie de rotor ou une partie de disque de butée) par exemple par tout type de procédé de projection thermique. De préférence, ce revêtement sera appliqué par un procédé de pulvérisation à plasma dans l'air (connu sous le nom anglais de " air plasma spraying").

Après la pulvérisation du revêtement sur le rotor ou sur le disque de butée (ou tout du moins sur une partie du rotor ou du disque), la surface revêtue de la pièce est rectifiée et/ou finie par un procédé de tribofinition.

La présente invention permet ainsi de faire fonctionner un palier aérodynamique à plus haute température que dans les paliers de l'art antérieur utilisant des revêtements de type fluoropolymère. Un revêtement selon la présente invention peut être utilisé à des températures allant au moins jusqu'à 400° C, c'est-à-dire des températures que l'on rencontre à de très hautes vitesses de rotation et/ou dans des turbomachines entrainées électriquement.

En effet, lors du fonctionnement d'un palier aérodynamique lorsque la vitesse de rotation augmente, le cisaillement du film aérodynamique augmente également. Ainsi, lorsque des vitesses élevées sont atteintes, on arrive à un échauffement thermique important provoquant une augmentation de la température au niveau du palier (et du disque de butée).

En outre, dans les machines entrainées électriquement, la chaleur dégagée par le moteur vient réchauffer l'air ambiant et conduit également à une augmentation de la température au niveau des paliers aérodynamiques et des disques de butée.

La présente invention permet de travailler à haute température. Des essais ont également mis en évidence une grande endurance d'un palier avec un rotor selon la présente invention puisque 150.000 cycles d'arrêt et de démarrage ont été réalisés avec des températures allant jusqu'à 350° C.

L'invention permet de réaliser efficacement la lubrification de paliers avec des pièces tournant à des vitesses supérieures à 60.000 tr/min (tours par minute) même dans des turbomachines entrainées par un moteur électrique.

La présente invention peut trouver son application par exemple dans des dispositifs mettant en œuvre des turbomachines, par exemple des dispositifs de climatisation et/ou de conditionnement d'air tels ceux installés à bord d'aéronefs pour gérer l'air dans une cabine et un cockpit.

Bien entendu, la présente invention ne se limite pas à la forme de réalisation préférée et aux variantes de réalisation présentées ci-dessus à titre d'exemples non limitatifs. Elle concerne également les variantes de réalisation à la portée de l'homme du métier dans le cadre des revendications ci-après.

## Revendications

1. Utilisation d'un revêtement comportant entre 50 et 90 % en poids d'alumine (Al₂O₃) ainsi qu'un oxyde choisi dans le groupe consistant en de l'oxyde de titane (TiO₂), de l'oxyde de chrome (Cr₂O₃) et un mélange de ceux-ci comme revêtement autolubrifiant d'un rotor ou d'un disque de butée pour une utilisation à haute température, supérieure à 300°C, d'un rotor dans un palier à feuilles.

2. Utilisation d'un revêtement selon la revendication 1, **caractérisée en ce que** le revêtement consiste en un mélange de 50 à 90 % en poids d'alumine (Al₂O₃) avec un oxyde choisi dans le groupe consistant en de l'oxyde de titane (TiO₂), de l'oxyde de chrome (Cr₂O₃) et un mélange de ceux-ci.

3. Utilisation d'un revêtement selon la revendication 2, **caractérisée en ce que** le revêtement consiste en un mélange d'alumine (Al₂O₃) et d'oxyde de titane (TiO₂).

4. Utilisation d'un revêtement selon l'une des revendications 1 à 3, **caractérisée en ce que** le revêtement comporte entre 65 et 75% en poids d'alumine(Al₂O₃).

5. Turbomachine, **caractérisée en ce qu'**elle comporte un palier aérodynamique à feuilles présentant un logement dans lequel viennent prendre place, d'une part, une partie cylindrique circulaire d'une pièce de turbomachine, ladite partie cylindrique circulaire étant revêtue au moins partiellement par un revêtement autolubrifiant comportant entre 50 et 90 % en poids d'alumine (Al₂O₃) ainsi qu'un oxyde choisi dans le groupe consistant en de l'oxyde de titane (TiO₂), de l'oxyde de chrome (Cr₂O₃) et un mélange de ceux-ci et, d'autre part, au moins une feuille, dite feuille supérieure, venant en regard de ladite partie cylindrique circulaire, ladite feuille supérieure n'étant pas revêtue d'un revêtement.

6. Dispositif de conditionnement d'air, **caractérisé en ce qu'**il comporte une turbomachine selon la revendication 5

## Patentansprüche

1. Verwendung einer Beschichtung, umfassend zwischen 50 und 90 Gew.-% Aluminiumoxid (Al₂O₃) sowie ein Oxid, ausgewählt aus der Gruppe bestehend aus Titanoxid (TiO₂), Chromoxid (Cr₂O₃) und einer Mischung davon, als selbstschmierende Beschichtung eines Rotors oder einer Anschlagscheibe für eine Hochtemperaturanwendung bei über 300°C eines Rotors in einem Folienlager.

2. Verwendung einer Beschichtung nach Anspruch 1, **dadurch gekennzeichnet, dass** die Beschichtung aus einer Mischung aus 50 bis 90 Gew.-% Aluminiumoxid (Al₂O₃) mit einem Oxid besteht, das aus der Gruppe bestehend aus Titanoxid (TiO₂), Chromoxid (Cr₂O₃) und einer Mischung davon ausgewählt ist.

3. Verwendung einer Beschichtung nach Anspruch 2, **dadurch gekennzeichnet, dass** die Beschichtung aus einer Mischung aus Aluminiumoxid (Al₂O₃) und Titanoxid (TiO₂) besteht.

4. Verwendung einer Beschichtung nach einem der Ansprüche 1 bis 3, **dadurch gekennzeichnet, dass** die Beschichtung zwischen 65 und 75 Gew.-% Aluminiumoxid (Al₂O₃) umfasst.

5. Turbomaschine, **dadurch gekennzeichnet, dass** sie ein aerodynamisches Folienlager umfasst, das eine Aufnahme aufweist, in der Folgendes untergebracht ist: einerseits ein kreiszylindrischer Abschnitt eines Turbomaschinenteils, wobei der kreiszylindrische Abschnitt wenigstens teilweise mit einer selbstschmierenden Beschichtung beschichtet ist, die zwischen 50 und 90 Gew.-% Aluminiumoxid (Al₂O₃) sowie ein Oxid umfasst, das aus der Gruppe ausgewählt ist, die aus Titanoxid (TiO₂), Chromoxid (Cr₂O₃) und einer Mischung davon besteht, und andererseits wenigstens eine Folie, genannt obere Folie, die dem kreiszylindrischen Abschnitt zugewandt ist, wobei die obere Folie nicht mit einer Beschichtung beschichtet ist.

6. Klimaanlage, **dadurch gekennzeichnet, dass** sie eine Turbomaschine nach Anspruch 5 umfasst.

## Claims

1. Use of a coating comprising between 50 and 90 wt% of alumina (Al₂O₃) and an oxide selected from the group consisting of titanium oxide (TiO₂), chromium oxide (Cr₂O₃), and a mixture of these, as a self-lubricating coating of a rotor or thrust disc for the use at high-temperature, more than 300°C, of a rotor in a foil bearing.

2. Use of a coating according to claim 1, wherein the coating consists of a mixture of 50 to 90 wt% of alumina (Al₂O₃) with an oxide selected from the group consisting of titanium oxide (TiO₂), chromium oxide (Cr₂O₃), and a mixture of these.

3. Use of a coating according to claim 2, wherein the coating consists of a mixture of alumina (Al₂O₃) and titanium oxide (TiO₂).

4. Use of a coating according to one of claims 1 to 3, wherein the coating comprises between 65 and 75 wt% of alumina (Al₂O₃).

5. Turbomachine **characterised in that** it comprises a foil-air bearing having a housing which accommodates, on the one hand, a circular cylindrical portion of a turbomachine part, said circular cylindrical portion being at least partially coated with a self-lubricating coating comprising between 50 and 90 wt% of alumina (Al₂O₃) and an oxide selected from the group consisting of titanium oxide (TiO₂), chromium oxide (Cr₂O₃), and a mixture of these, and on the other hand at least one foil, called the top foil, coming to face said circular cylindrical portion, said top foil being not coated with a coating.

6. Air conditioning device, **characterised in that** it comprises a turbomachine according to claim 5.
